# EUROPEAN PATENT SPECIFICATION

(11) **EP 1 234 433 B1**
(45) Date of publication and mention of the grant of the patent: **21.09.2005**
(21) Application number: 00980865.0
(22) Date of filing: 30.11.2000
(51) Int. Cl.: H04L 29/12, G06F 17/30

(54) **SYSTEM AND METHOD FOR ENCODING USER INFORMATION IN DOMAIN NAMES**
SYSTEM UND VERFAHREN ZUR KODIERUNG VON BENUTZERINFORMATION IN DOMÄNENNAMEN
SYSTEME ET PROCEDE DE CODAGE D'INFORMATIONS UTILISATEUR DANS DES NOMS DE DOMAINE

(30) Priority: 03.12.1999 US 168978 P
(43) Date of publication of application: 28.08.2002
(73) Proprietor: AT & T Corp., New York, NY 10013-2412 (US)
(72) Inventor: BELLOVIN, Steven, Michael, Westfield, NJ 07090 (US)
(74) Representative: Modiano, Guido
(86) International application number: PCT/US2000/032513
(87) International publication number: WO 2001/041401

(56) References cited:
- US-A- 5 708 780
- US-A- 5 815 665
- P. VIXIE: "RFC 2671 - Extension Mechanism for DNS (EDNS0)" REQUEST FOR COMMENTS, [Online] August 1999 (1999-08), XP002174062 Retrieved from the Internet: <URL:http://www.cis.ohio-state.edu/cgi-bin /rfc/rfc2671.txt> [retrieved on 2001-08-06]
- M. CRAWFORD: "RFC 2673 - Binary Labels in the Domain Name System" REQUEST FOR COMMENTS, [Online] August 1999 (1999-08), XP002174065 Retrieved from the Internet: <URL:http://www.cis.ohio-state.edu/cgi-bin /rfc/rfc2673.txt> [retrieved on 2001-08-06]

## Description

### Field of the Invention

The present invention relates generally to communication networks. More particularly, the present invention relates to systems for storing and accessing user information in a distributive network.

### Background of the Invention

There is a fundamental need in communication networks to capture and utilize information regarding users of the services provided by the network - whether for the purposes of implementing those services, for use in billing for those services, for marketing of different services, or for some other purpose. The traditional model underlying conventional communication networks has been to store such user information in a large central database. The maintenance of such databases is notoriously difficult and poses numerous practical implementation challenges. Inevitably, such a large central database rapidly becomes a bottleneck in the network.

The communication paradigm underlying computer network environments today provides new challenges for the storage and dissemination of user information. The Internet is a worldwide system of computer networks - a network of networks in which computers segment messages into packets and send them across the network to a destination identified by an Internet Protocol (IP) address. Addresses in a distributed system can also be expressed using another more human-friendly hierarchical naming scheme referred to in the art as domain names. For example, World Wide Web clients on the Internet use domain names such as "www.att.com" to refer to computers in the network, and the domain name system provides a distributed database that maintains and answers queries on mappings between domain names and network addresses. See P. Mockapetris, "Domain names - concepts and facilities," RFC 1034, ISI, Nov. 1987; P. Mockapetris, "Domain names - implementation and specification," RFC 1035, ISI, Nov. 1987.

User information can be of particular use to providers of services across the Internet or the World Wide Web. For example, it may be desirable for an Internet Service Provider (ISP) to restrict access to certain newsgroups on Usenet based on profile information provided by the user, whether for legal or practical reasons. A provider of services on the Internet may wish to learn who in the network is using the services in order to provide more targeted marketing. Currently, users of the Internet and the World Wide Web often must identify themselves and proceed through a separate authentication process for each separate service they want to use. Once provided by a user, a Web server can store user information in what is called a "cookie" which is a file that a server stores on the client side to record state information. Cookies are commonly used to store user preferences when using a particular Web site, to customize the Web page for the user, and/or to provide different advertising with each visit. Nevertheless, the use of cookies has been extremely controversial and is perceived to implicate various privacy concerns.

US 5,815,665 discloses an Online Brokering Service that handles user-authentication and billing matters so as to allow users to purchase online services from Service Provider sites without having to transmit payment information over the Internet.

P. Vixie, in "RFC 2671- Extension Mechanism for DNS (EDNS0)", allegedly published in August 1999, discloses backward compatible mechanisms for allowing the Domain Name System's wire protocol to grow.

New ways are needed of communicating information about a user to assorted services in the network that protect subscriber privacy and that do not require a user to go through burdensome authentication procedures.

### Summary of the Invention

The present invention is defined in the appended claims. In summary, it is utilized a technique based on a domain name system to provide additional information about a user to a service connected to a communication network. User information is stored and encoded into a domain name that is generated and interpreted dynamically. In an embodiment of the present invention, a specialized domain name server is placed at or near a point of presence and has access to private user information on the users who connect through the particular point of presence. Services can utilize a standard domain name query, requesting a domain name given a user's network address, to obtain a name constructed by the specialized server. The name can contain different pieces of information regarding the user encoded cryptographically by different keys to permit only selected disclosure of user information. The present invention provides a way of readily supplying selected user information to a service in a manner that can be authenticated and that is transparent to the user while, at the same time, protecting the privacy of the user.

These and other advantages of the invention will be apparent to those of ordinary skill in the art by reference to the following detailed description and the accompanying drawings.

### Brief Description of the Drawings

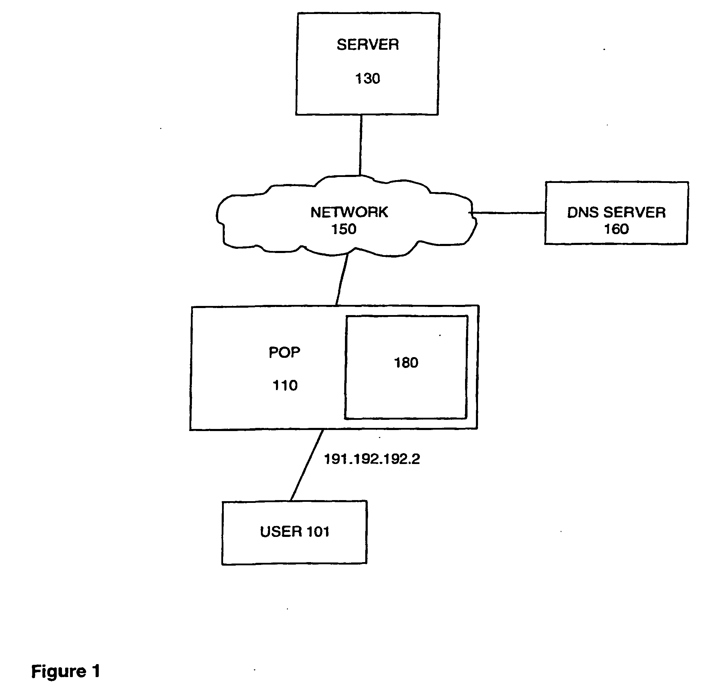

Fig. 1 sets forth a diagram of a communication network illustrating an embodiment of the present invention.

### Detailed Description

With reference to Fig. 1 which illustrates an embodiment of the present invention, user 101 connects to an ISP through a point of presence (POP) 110 operated by the ISP. The connection can be established in any of a number of known ways, including using a cable modem, a DSL line, a satellite link, or dialing into the POP with a modem across an analog telephone line. The POP 110 provides an access point to a communication network 150 such as the Internet and usually includes some form of aggregator or hub, servers, routers, and /or switches. The network 150 has some form of domain name system which, as described in the background, provides a distributed database that maintains and answers queries on mappings between domain names and network addresses. The domain name system is represented abstractly in Fig. 1 as servers 160. Although the discussion below uses the Internet and the Domain Name System (DNS) used in the Internet as an example, the present invention is not so limited and is applicable to communication networks in general having an address-to-name mapping system of some type.

When the user 101 connects to the POP 110, the user 101 is assigned a network address. In the case of the Internet, computers are identified by an Internet Protocol (IP) address, conventionally a 32-bit number often expressed as fow 8-bit values separated by periods of the form *a*.*b*.*c*.*d*, e.g. 191.192.192.2. The IP addresses can be assigned in a static manner or, as is more often the case, dynamically assigned from a pool of addresses owned by the ISP.

In accordance with a preferred embodiment of the present invention, a specialized domain name system server 180 is connected to the POP and the rest of the domain name system. The specialized server 180 is advantageously co-located with the POP or can be an integral part of the POP. Server 180 is delegated the responsibility to answer domain name system queries for a zone encompassing the network addresses assigned by the POP. It is advantageous that the structure of the search field for a DNS query, i.e. *d.c.b.a.in-addr.arpa*, corresponds to the normal manner in which IP addresses are allocated. Accordingly, if a single POP hands out IP addresses in the range *a*.*b*.*c*, a single DNS server can be delegated the responsibility for the *c.b.a.in-add.arpa* zone of the DNS. Thus, the domain name system provides an automatic delegation scheme based on the topology of the network. (POPs that assign larger or smaller blocks of IP addresses correspond to DNS zones where the subnets are not allocated on byte boundaries. There are standard techniques that can be used to do the appropriate delegation. See, for example, M. Crawford, "Binary Labels in the Domain Name System", IETF RFC 2673, August 1999).

An alternative to collocating the DNS server with the POP is to use DNS Dynamic Update. See, e.g., P. Vixie, Ed., S. Thomson, Y. Rekhter, J. Bound., "Dynamic Updates in the Domain Name System (DNS UPDATE)", IBTF RFC 2136, April 1997. In such a scenario, the POP would notify the server of changes as users log in and out. When a service wishes to learn something about the user, it issues a DNS query for the name *d.c.b.a.in-addr.arpa*. For example in Fig. 1, server 130 connected to the network 150 wishes to obtain additional information on user 101, which it knows is currently using the IP address 191.192.192.2, Using an operating system routine which RFC 1035 terms a "resolver", server 130 constructs a DNS query from the IP address for the name 191.192.192.2.IN-ADDR.ARPA. The DNS query is issued to name server 160 which, assuming that the server has not cached the requested resource record answering the query, will either refer the issuer of the query to another server or issue its own query to another DNS server, depending on the type of query. As implemented in the Internet today, both the query and the responses are carried in a standard message format which is described in RFC 1035. At some point, the DNS query will be passed along through the domain name space hierarchy to an authoritative name server, i.e. server 180. Server 180 can act as a standard DNS server and retrieve a standard DNS resource record, or, where the request is directed to an IP address of a user connected to the POP, can treat the DNS query as a request for user information and proceed as follows. Rather than retrieving a standard DNS resource record, server 180 dynamically constructs a resource record answering the DNS query. The specialized DNS server 180 consults a database of logged-in users and proceeds to constructs a domain name that encodes the essential information about the particular user in the domain name. An example of a format for such an encoded domain name is provided below. The information is preferably cryptographically protected, as further described below.

The resource record with the encoded domain name is then returned through the domain name system to server 130. Server 130, assuming it has the correct cryptographic keys, can then decode the information from the domain name provided by specialized DNS server 180. The user information DNS resource records can be treated like any other DNS resource records, which have a format described more fully in RFC 1035. DNS, as implemented in the Internet, uses type "A" records to specify domain name-to-address mappings and type "PTR" records to specify address-to-name mappings. Because of various security concerns, many DNS APIs cross-check returned PTR records by asking for the corresponding A record. That is, if handed a name of the format given above, these APIs will automatically ask what address corresponds to that name. The dynamic server 180 can construct the A record from the name, without recourse to databases. The IP address can either be a single string, containing all 32 bits, or it can be structured to provide for delegation to the POPs; this is discussed further below.

The integrity of DNS responses can, if necessary, be assured by use of standard DNS security mechanisms. See, e.g., D. Eastlake, "Domain Name System Security Extensions," RFC 2535, IETF Network Working Group, March 1999.

DNS resource records are normally cached by the recipients for some period of time set by the authoritative DNS server. The expiration time is usually set in some time-to-live (TTL) field: the TTL parameter typically determines a tradeoff between the load on the authoritative name server for the resource record and how current are copies of the resource record in caches of other name servers. With the present invention, server 180 can set the TTL parameter to a value corresponding to the minimum amount of time between uses of the same IP address. Values of about a minute are probably appropriate, although the TTL value can be tuned as needed. The values can, in fact, be adjusted dynamically, depending on the dial-in rate at each POP.

There are a number of services provided across a communication network that require knowledge of a user's identity. The present invention advantageously allows a service provider to recognize a user without further prompting and, furthermore, with automatic authentication of the identity. For example, many companies provide customer care over the Internet in some automated fashion. Current online customer care support forms, such as trouble ticket forms, ask the user to supply a lot of information that is already known to the network in some sense. The present invention permits the default values for the form to be filled in automatically. As another example, when complaints are received by an ISP about abuse of its e-mail system, it is an annoyance to track down which user was responsible. Using the present invention, the information is encoded in the DNS name.

As another example, AT&T provides a service called Click-to-Dial" which permits a user to click on a Web page link and activate a process in the telephone network which calls the indicated destination and the user. This is a particularly easy way for a merchant to provide access to its telephone consumer services. Unfortunately, requesting that users configure their telephone numbers into their Web browsers has many disadvantages: it is a nuisance to users, it is an invasion of privacy if anyone but AT&T can retrieve the telephone number, and there is an authentication problem. It would be preferable not to permit disgruntled individuals to supply fake phone numbers and connect unwitting victims to an unwanted telephone numbers such as a sexually-explicit pay service or the like. With the present invention, an efficient mechanism is provided for providing user information such as a telephone number in a manner that can be authenticated and traced back to a real user. (N.B. There are still a few caveats here. For example, if two users are using IRC simultaneously, one might be able to learn the other's IP address, and hence DNS name. Dial requests should only come from merchants who have subscribed to this service and should include the IP address used to make the Web connection - which does not work properly if proxy Web servers are in use)

### A. Name Format

The name format presented below is merely an example of the type of information that can be encoded in a domain name and is not intended to be limiting or definitive. The following example encodes the kinds of information a typical Internet Service Provider is likely to desire:
*subaccount.account.restrict.demog. ind.IPaddr.*Q.WORLDNET.ATT.NET
The Q field serves no semantic purpose; rather, it is useful for automatically directing all lookups for such information-encoded names to the appropriate set of dynamic servers (hereinafter referred to by the inventor as a "Q-server"). A number of such servers could service these special queries for "Q" type domain names. Alternatively, the servers could be separated into groups, e.g. "QA", "QB", etc., perhaps separated both geographically and cryptographically. The latter would be advantageous for operation outside of the United States, especially given the restrictions on exporting cryptographic gear.

All fields before the Q, with the exception of the IP address and the *ind* field, are cryptographically protected, as described below. The *ind* field is a cryptographic indicator. It denotes which key sets were used to protect the remaining fields, thus permitting changes of keys. Apart from being standard cryptographic practice, the ability to change keys lets the entity maintaining the Q-server provide or sell keys for specific limited purposes and for limited times, such as a particular week or month.

The *demog* field encodes whatever user demographic information the POP operator may have and may want to provide to others. The possible candidates encompass almost anything that the POP operator knows about the user. For example, these include the ZIP or ZIP+4 code, the phone number actually dialed (thus indicating if the person is a "road warrior"), the billing plan (persons signed up to a 5 hours/month plan clearly are not heavy Internet users), and possibly some indication of how many hours online this person has logged recently.

The *restrict* code denotes what restrictions are placed on this user, and in particular what types of content are appropriate. These can either be functional (no "adult content") or category-based ("Singaporean", "Saudi", "German", etc.) More than one such restriction may apply to the user. Such information could be very valuable when provided to Web site operators who provide adult content.

The *account* and *subaccount* fields denote the user account name and an alternative "screen name" or subaccount. An account owner who sets up such a subaccount (for example, for other family members) could also specify new restrictions on the account, as described above.

Other fields could, of course, be added. Optional fields could also be specified by preceding such fields with a type code.

### B. Cryptographic Encoding

By means of suitable cryptographic techniques, it is possible to conceal as little or as much as desired about the user, and even sell certain cryptographic keys while keeping others confidential. One of ordinary skill in the art of cryptography could devise any of a number of cryptographic methods for encoding the above information which would be contemplated under the present invention. If desired, some of the information can be left unencrypted, so that anyone can see it. This information can be cryptographically authenticated.

It is preferable to encode the data in a form that isn't amenable to "code book" collection. For example, one would not want to make it possible for outside parties to tell if a given user has connected to their service on two successive days. There are other ways for the service to gather such data themselves (see, e.g., the cookie-based mechanism used by *www.doubleclick.com*)*,* but the above use of domain names should not as a matter of privacy make it easier for services to do this. Other data, such as the restriction codes and the demographic information, are even more sensitive, especially if outsiders can find correlations with what they know of someone and the current DNS name assigned to them. Accordingly, it is desirable to ensure that the same information is encoded differently during different login sessions. For that matter, there is no reason to return the same information even during a single login session to an ISP, especially if the two queries are some time apart-people with unlimited usage accounts often stay logged in for long periods of time.

The use of cryptographic techniques with current domain name schemes is, however, constrained by the length of the returned name. Realistically, domain names should be shorter than 256 characters. This precludes such techniques as cipher block chaining. Instead, in a preferred embodiment of the present invention, it is recommended that 8-bit *Cipher Feedback* mode (CFB-8) be utilized. CFB-8 has the property that each byte is encrypted individually; however, the ciphertext value generated depends on the preceding 8 bytes. The initial state of the encryption engine is set by means of an *initialization vector* (IV); this can be selected at the time the keys are assigned. Each encryption is preceded by the encryption of three random bytes; this provides 2²⁴ possible encryptions of the remainder of the field, which should suffice for the purposes of the present invention.

The output of the encryption should be encoded in hexadecimal. It is preferable to utilize something like base-64, but, unfortunately, DNS names currently are case-insensitive and don't provide a rich enough alphabet.

Each field should be encrypted using a separate key/IV pair. Any block cipher (such as 3DES or AES) should suffice for purposes of the present invention. The result is that each field can be decrypted independently, but knowledge of one field's key does not permit decryption of another field.

For simplicity in key management, the individual keys for each field can be generated cryptographically from a seed value and a master key. For example, the actual key for the demography field could be generated by encrypting the concatenation of the type value, the server class (QA, QB, etc.), and the *ind* field of the week. This generated key would be what is sold to customers. Without knowledge of the master key, though, they would be unable to recover the next day's or week's demography key. At the same time, it would not be necessary to distribute new keys to every POP every day.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention. For example, the detailed description describes the present invention with particular emphasis on usage with DNS on the Internet. However, the principles of the present invention could be extended to other networks having an address-to-name mapping system.

## Claims

1. A method for accessing user information for use in a communications network (150) having a domain name system (160) that answers queries on mappings between domain names and network addresses, **characterized in that** said method comprises, at a specialized Domain Name System server (180), the steps of:
receiving a domain name system query to return a domain name for a network address of a user (101) connected to the communications network (150) through a Point Of Presence (110);
generating a domain name system record in response to the domain name system query; and
including, in said domain name system record, information from a database, the information being related to the connected user (101) and in addition to the domain name associated with the network address.

2. The method of claim 1 wherein the additional information is encoded in a domain name mapped to the network address of the particular user (101).

3. The method of claim 1 wherein the step of generating a domain name system record further comprises the step of determining which user is connected to the communications network (150) using the network address identified in the domain name system query.

4. The method of claim 3 wherein the step of generating a domain name system record further comprises the step of consulting a database of information about users and extracting the additional information about the user (101).

5. The method of claim 1 wherein the additional information about the user (101) is protected with a cryptographic key.

6. The method of claim 5 wherein different portions of the additional information about the user (101) are protected with different cryptographic keys.

7. The method of claim 1 wherein the domain name system query includes one or more values indicative of a type of additional information about the user (101) being requested and wherein the type of additional information specified in the domain name system query is included in the domain name system record.

8. The method of claim 1 wherein the additional information comprises account information about the user (101).

9. The method of claim 1 wherein the additional information comprises demographic information about the user (101).

10. The method of claim 1 wherein the additional information comprises restrictions to be placed on activities of the user (101).

11. An apparatus for accessing user information for use in a communications network (150) in which a domain name system (160) is adapted to answer queries on mappings between domain names and network addresses, **characterized in that** said apparatus comprises:
means (180) for receiving a domain name system query to return a domain name for a network address of a user (101) connected to the communications network through a Point Of Presence (110);
means (180) for generating a domain name system record in response to the domain name system query; and
means (180) for including, in said domain name system record, information from a database, the information being related to the connected user (101) and in addition to the domain name associated with the network address.

12. The apparatus of claim 11 wherein the additional information is encoded in a domain name mapped to the network address of the particular user (101).

13. The apparatus of claim 11 further comprising means for determining which user is connected to the communications network (150) using the network address identified in the domain name system query.

14. The apparatus of claim 13 further comprising means for consulting a database of information about users and extracting the additional information about the user (101).

15. The apparatus of claim 11 wherein the additional information about the user (101) is protected with a cryptographic key.

16. The apparatus of claim 15 wherein different portions of the additional information about the user (101) are protected with different cryptographic keys.

17. The apparatus of claim 11 wherein the domain name system query includes one or more values indicative of a type of additional information about the user (101) being requested and wherein the type of additional information specified in me domain name system query is included in the domain name system record.

18. The apparatus of claim 11 wherein the additional information comprises account information about the user (101).

19. The apparatus of claim 11 wherein the additional information comprises demographic information about the user (101).

20. The apparatus of claim 11 wherein the additional information comprises restrictions to be placed on activities of the user (101).

## Patentansprüche

1. Ein Verfahren zum Zugreifen auf eine Benutzerinformation für die Verwendung in einem Kommunikationsnetz (150), das über ein Domäne-Namen-System (160) verfügt, das Abfragen in Bezug auf Abbildungen zwischen Domäne-Namen und Netzadressen beantwortet, **dadurch gekennzeichnet, dass** das Verfahren an einem spezialisierten Domäne-Namen-System-Server (180) folgende Schritte umfasst:
das Empfangen einer Domäne-Namen-System-Abfrage, um einen Domäne-Namen für eine Netzadresse eines Benutzers (101) zurückzuführen, der mit dem Kommunikationsnetz (150) durch einen Übergabepunkt verbunden ist;
das Erzeugen einer Domäne-Namen-System-Aufzeichnung als Reaktion auf die Domäne-Namen-System-Abfrage; und
das Einschließen einer Information von einer Datenbank in der Domäne-Namen-System-Aufzeichnung, wobei die Information den verbundenen Benutzer (101) betrifft und zusätzlich zum mit der Netzadresse verknüpften Domäne-Namen ist.

2. Das Verfahren nach Anspruch 1, worin die zusätzliche Information in einem Domäne-Namen kodiert ist, der auf die Netzadresse des speziellen Benutzers (101) abgebildet wird.

3. Das Verfahren nach Anspruch 1, worin der Schritt zum Erzeugen einer Domäne-Namen-System-Aufzeichnung weiterhin den Schritt der Bestimmung darüber umfasst, welcher Benutzer mit dem Kommunikationsnetz (150) verbunden ist, und zwar indem die Netzadresse verwendet wird, die in der Domäne-Namen-System-Abfrage identifiziert wird.

4. Das Verfahren nach Anspruch 3, worin der Schritt zum Erzeugen einer Domäne-Namen-System-Aufzeichnung weiterhin den Schritt zum Konsultieren einer Datenbank von Information über Benutzer und zum Extrahieren der zusätzlichen Information über den Benutzer (101) umfasst.

5. Das Verfahren nach Anspruch 1, worin die zusätzliche Information über den Benutzer (101) von einem kryptographischen Schlüssel geschützt ist.

6. Das Verfahren nach Anspruch 5, worin verschiedene Teile der zusätzlichen Information über den Benutzer (101) mit verschiedenen kryptographischen Schlüsseln geschützt sind.

7. Das Verfahren nach Anspruch 1, worin die Domäne-Namen-System-Abfrage einen oder mehrere Werte einschließt, die eine verlangte Art der zusätzlichen Information über den Benutzer (101) anzeigt, worin die Art der zusätzlichen Information, die in der Domäne-Namen-System-Abfrage bestimmt wird, in der Domäne-Namen-System-Aufzeichnung eingeschlossen ist.

8. Das Verfahren nach Anspruch 1, worin die zusätzliche Information die Kontoinformation zu dem Benutzer (101) umfasst.

9. Das Verfahren nach Anspruch 1, worin die zusätzliche Information die demographische Information zu dem Benutzer (101) umfasst.

10. Das Verfahren nach Anspruch 1, worin die zusätzliche Information Beschränkungen umfasst, die in Bezug auf Aktivitäten des Benutzers (101) gesetzt werden sollen.

11. Ein Gerät, um auf eine Benutzerinformation zur Verwendung in einem Kommunikationsnetz zuzugreifen, in dem ein Domäne-Namen-System (160) angepasst ist, um Abfragen in Bezug auf Abbildungen zwischen Domäne-Namen und Netzadressen zu beantworten, **dadurch gekennzeichnet, dass** das folgenden Gerät umfasst:
ein Mittel (180) zum Empfangen einer Domäne-Namen-System-Abfrage, um einen Domäne-Namen für eine Netzadresse eines Benutzers (101) zurückzuführen, der mit dem Kommunikationsnetz über einen Übergabepunkt (110) verbunden ist;
ein Mittel (180) zum Erzeugen einer Domäne-Namen-System-Aufzeichnung als Reaktion auf die Domäne-Namen-System-Abfrage; und
ein Mittel (180), um in der Domäne-Namen-System-Aufzeichnung Information von einer Datenbank einzuschließen, wobei die Information den verbundenen Benutzer (101) betrifft und zusätzlich zum mit der Netzadresse verknüpften Domäne-Namen ist.

12. Das Gerät nach Anspruch 11, worin die zusätzliche Information in einem Domäne-Namen kodiert wird, der auf die Netzadresse des speziellen Benutzers (101) abgebildet wird.

13. Das Gerät nach Anspruch 11, das weiterhin ein Mittel umfasst, um zu bestimmen, welcher Benutzer mit dem Kommunikationsnetz (150) verbunden ist, und zwar mittels Verwendung der in der Domäne-Namen-System-Abfrage identifizierten Netzadresse.

14. Das Gerät nach Anspruch 13, das weiterhin ein Mittel zum Konsultieren einer Datenbank von Information über Benutzer und zum Extrahieren der zusätzlichen Information über den Benutzer (101) umfasst.

15. Das Gerät nach Anspruch 11, worin die zusätzliche Information über den Benutzer (101) von einem kryptographischen Schlüssel geschützt ist.

16. Das Gerät nach Anspruch 15, worin verschiedene Teile der zusätzlichen Information über den Benutzer (101) von verschiedenen kryptographischen Schlüsseln geschützt werden.

17. Das Gerät nach Anspruch 11, worin die Domäne-Namen-System-Abfrage einen oder mehrere Werte einschließt, die eine verlangte Art der zusätzlichen Information über den Benutzer (101) anzeigt, worin die Art der zusätzlichen Information, die in der Domäne-Namen-System-Abfrage bestimmt wird, in der Domäne-Namen-System-Aufzeichnung eingeschlossen ist.

18. Das Verfahren nach Anspruch 11, worin die zusätzliche Information die Kontoinformation zu dem Benutzer (101) umfasst.

19. Das Verfahren nach Anspruch 11, worin die zusätzliche Information die demographische Information zu dem Benutzer (101) umfasst.

20. Das Verfahren nach Anspruch 11, worin die zusätzliche Information Beschränkungen umfasst, die in Bezug auf Aktivitäten des Benutzers (101) gesetzt werden.

## Revendications

1. Procédé pour accéder à des données utilisateur pour l'utilisation dans un réseau de communication (150) ayant un système de noms de domaine (160) qui répond à des demandes d'établissement d'une corrélation entre des noms de domaines et des adresses réseau, **caractérisé en ce que** ledit procédé comprend, au niveau d'un serveur de système de noms de domaine spécialisé (180), les étapes consistant à :
recevoir une demande de système de noms de domaine pour renvoyer un nom de domaine pour une adresse réseau d'un utilisateur (101) connecté au réseau de communication (150) par le biais d'un point de présence (110) ;
créer un enregistrement de système de noms de domaine en réponse à la demande de système de noms de domaine ; et
inclure, dans ledit enregistrement de système de noms de domaine, des données provenant d'une base de données, les données étant liées à l'utilisateur connecté (101) et par ailleurs au nom de domaine associé à l'adresse réseau.

2. Procédé selon la revendication 1 dans lequel les informations complémentaires sont codées dans un nom de domaine corrélé à l'adresse réseau de l'utilisateur particulier (101).

3. Procédé selon la revendication 1 dans lequel l'étape consistant à créer un enregistrement de système de noms de domaine comprend en outre l'étape consistant à déterminer qui est l'utilisateur connecté au réseau de communication (150) en utilisant l'adresse réseau identifiée dans la demande de système de noms de domaine.

4. Procédé selon la revendication 3 dans lequel l'étape consistant à créer un enregistrement de système de noms de domaine comprend en outre les étapes consistant à consulter une base de données contenant des informations relatives à des utilisateurs et à extraire les informations complémentaires relatives à l'utilisateur (101).

5. Procédé selon la revendication 1 dans lequel les informations complémentaires relatives à l'utilisateur (101) sont protégées par une clé de cryptage.

6. Procédé selon la revendication 5 dans lequel différentes parties des informations complémentaires relatives à l'utilisateur (101) sont protégées par différentes clés de cryptage.

7. Procédé selon la revendication 1 dans lequel la demande de système de noms de domaine comprend une ou plusieurs valeurs indiquant un type d'informations complémentaires relatives à l'utilisateur (101) qui sont demandées, et dans lequel le type d'informations complémentaires spécifié dans la demande de système de noms de domaine est inclus dans l'enregistrement de système de noms de domaine.

8. Procédé selon la revendication 1 dans lequel les informations complémentaires comprennent des informations relatives à un compte de l'utilisateur (101).

9. Procédé selon la revendication 1 dans lequel les informations complémentaires comprennent des informations démographiques relatives à l'utilisateur (101).

10. Procédé selon la revendication 1 dans lequel les informations complémentaires comprennent des restrictions qui doivent être placées sur des activités de l'utilisateur (101).

11. Système pour accéder à des données utilisateur pour l'utilisation dans un réseau de communication (150) dans lequel un système de noms de domaine (160) est adapté pour répondre à des demandes d'établissement d'une corrélation entre des noms de domaines et des adresses réseau, **caractérisé en ce que** ledit système comprend :
des moyens (180) pour recevoir une demande de système de noms de domaine pour renvoyer un nom de domaine pour une adresse réseau d'un utilisateur (101) connecté au réseau de communication par le biais d'un point de présence (110) ;
des moyens (180) pour créer un enregistrement de système de noms de domaine en réponse à la demande de système de noms de domaine ; et
des moyens (180) pour inclure, dans ledit enregistrement de système de noms de domaine, des données provenant d'une base de données, les données étant liées à l'utilisateur connecté (101) et par ailleurs au nom de domaine associé avec l'adresse réseau.

12. Système selon la revendication 11 dans lequel les informations complémentaires sont codées dans un nom de domaine corrélé à l'adresse réseau de l'utilisateur particulier (101).

13. Système selon la revendication 11 comprenant en outre des moyens pour déterminer qui est l'utilisateur connecté au réseau de communication (150) en utilisant l'adresse réseau identifiée dans la demande de système de noms de domaine.

14. Système selon la revendication 13 comprenant en outre des moyens pour consulter une base de données contenant des informations relatives à des utilisateurs et pour extraire les informations complémentaires relatives à l'utilisateur (101).

15. Système selon la revendication 11 dans lequel les informations complémentaires relatives à l'utilisateur (101) sont protégées par une clé de cryptage.

16. Système selon la revendication 15 dans lequel différentes parties des informations complémentaires relatives à l'utilisateur (101) sont protégées par différentes clés de cryptage.

17. Système selon la revendication 11 dans lequel la demande de système de noms de domaine comprend une ou plusieurs valeurs indiquant un type d'informations complémentaires relatives à l'utilisateur (101) qui sont demandées, et dans lequel le type d'informations complémentaires spécifié dans la demande de système de noms de domaine est inclus dans l'enregistrement de système de noms de domaine.

18. Système selon la revendication 11 dans lequel les informations complémentaires comprennent des informations relatives à un compte de l'utilisateur (101).

19. Système selon la revendication 11 dans lequel les informations complémentaires comprennent des informations démographiques relatives à l'utilisateur (101).

20. Système selon la revendication 11 dans lequel les informations complémentaires comprennent des restrictions qui doivent être placées sur des activités de l'utilisateur (101).
